# EUROPÄISCHE PATENTSCHRIFT

(11) **EP 1 269 269 B1**
(45) Veröffentlichungstag und Bekanntmachung des Hinweises auf die Patenterteilung: **05.11.2003**
(21) Anmeldenummer: 01933679.1
(22) Anmeldetag: 10.03.2001
(51) Int. Cl.: G03G 15/00, B65H 5/22

(54) **VORRICHTUNG ZUM TRANSPORTIEREN UND LESEN VON FLÄCHIGEM MATERIAL**
DEVICE FOR TRANSPORTING AND READING FLAT MATERIAL
DISPOSITIF DE TRANSPORT ET DE LECTURE DE MATERIAU PLAT

(30) Priorität: 04.04.2000 DE 10016763
(43) Veröffentlichungstag der Anmeldung: 02.01.2003
(73) Patentinhaber: BÖWE SYSTEC AG, 86159 Augsburg (DE)
(72) Erfinder: KOELLE, Helmut, 86179 Augsburg (DE)
(74) Vertreter: Schwarz, Thomas, Dipl.-Ing.
(86) Internationale Anmeldenummer: EP0102693
(87) Internationale Veröffentlichungsnummer: WO01075528

(56) Entgegenhaltungen:
- DE-A- 4 015 210
- DE-A- 19 807 944
- US-A- 3 980 294

## Beschreibung

Die Erfindung betrifft eine Vorrichtung zum Lesen von flächigem Material nach dem Oberbegriff des Anspruches 1.

Eine solche Vorrichtung ist bekannt aus dem US-A-3,980,294. Sie besteht aus einem endlosen, über zwei Rollen geführten perforiertem Band. Zwischen dem oberen und dem unteren Trumm des Bands ist eine Unterdruckkammer vorgesehen. Oberhalb des oberen Trumms des Bandes ist eine Lichtquelle angeordnet. Diese Lichtquelle ist mit einem Spalt versehen. Ein zu kopierendes Papier wird durch den an den Perforationen des Bandes wirkenden Unterdruck gegen dieses Band gehalten und wird dabei an der Lichtquelle vorbeigeführt, wobei die Markierungen des Blatts über den Spalt erfaßt werden. Bei dieser bekannten Vorrichtung sind Markierungen erfaßbar, die sich auf der Blattoberseite befinden. Markierungen an der Blattunterseite dagegen können nicht erfaßt werden.

Aus der DE 198 07 944 A1 ist eine Einrichtung zum elektronischen Übertragen von in Schriftform auf Papierblättern oder Endlospapier vorliegenden Informationen bekannt, bei der das Papier zwischen drehangetriebenen Transportwalzen und gegenüberliegenden Gegenwalzen transportiert wird. Um die Informationen auf beiden Seiten des Papiers in einem Durchgang zu erfassen, ist auf jeder Seite des Papiers eine Einrichtung zur Erfassung der Informationen vorgesehen, die in einer Steuereinheit in elektronische Signale umgewandelt und zu einem Empfänger übertragen werden.

Es besteht die Aufgabe, eine gattungsgemäße Vorrichtung so auszubilden, daß sowohl Markierungen an der Materialoberseite als auch an der Unterseite erfaßbar sind.

Gelöst wird diese Aufgabe mit den Merkmalen des Anspruches 1. Vorteilhafte Ausgestaltungen sind den Unteransprüchen entnehmbar.

Neben dem Vorteil der beidseitigen Lesbarkeit ist von weiterem Vorteil, daß keine Einschränkung des Lesebereichs gegeben ist. Eine Lesung ist sowohl im Lauf als auch im Stillstand möglich. Infolge der geringen zu bewegenden Massen ist eine hohe Beschleunigung des zu transportierenden flächigen Materials möglich.

Ein Ausführungsbeispiel wird nachfolgend anhand der Zeichnungen näher erläutert. Es zeigen:
- **Figur 1:**: Eine Seitenansicht der Vorrichtung beim Lesen von Markierungen an einer Blattoberseite;
- **Figur 2:**: eine der Figur 1 entsprechende Seitenansicht beim Lesen von Markierungen an der Blattunterseite
- **Figur 3:**: einen Vertikalschnitt durch eine erste Ausführungsform der Vorrichtung und
- **Figur 4:**: einen Vertikalschnitt durch eine zweite Ausführungsform.

Die Vorrichtung weist ein endloses perforiertes Band 1 auf, das über zwei Rollen 2, 3 geführt ist, von denen eine Rolle angetrieben wird. Der obere Trumm 4 des Bands 1 ist abgedeckt durch eine transparente Platte 5, die bevorzugt aus Glas besteht. Unterhalb des unteren Trumms 6 befindet sich eine weitere transparente Platte 7. Die Platten 5, 7 befinden sich in geringfügigem Abstand zum Band 1.

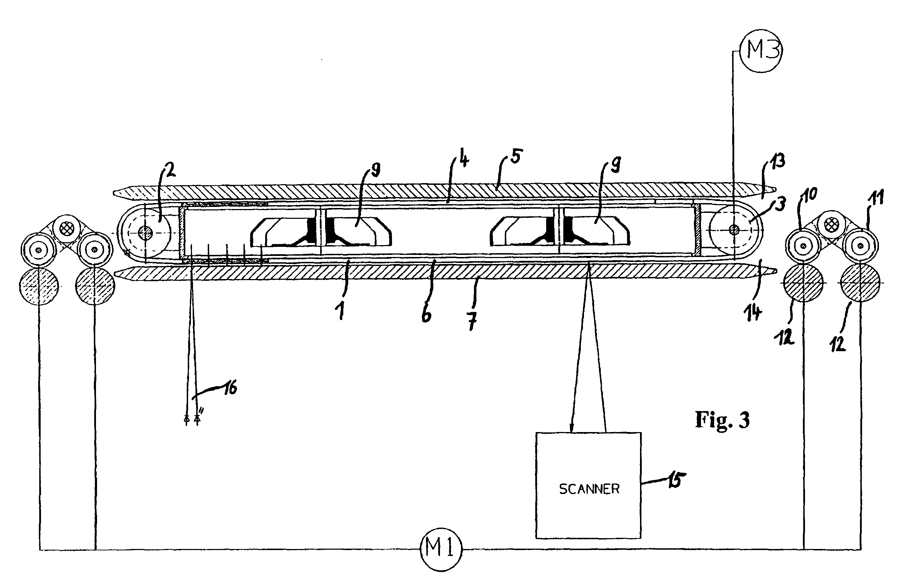

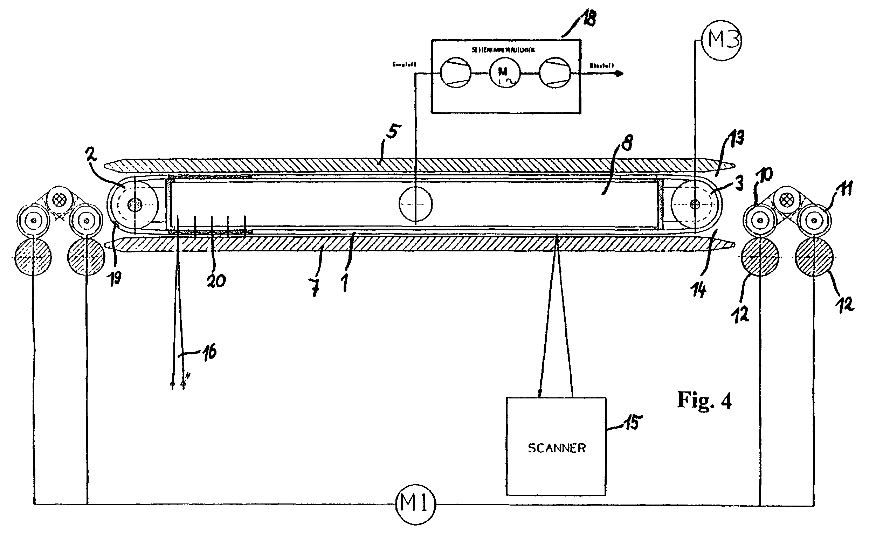

Gemäß Figur 3 befinden sich zwischen dem oberen und dem unteren Trumm 4, 6 zwei Gebläse 9. Die Drehrichtung der Gebläse 9 ist umkehrbar. Anstelle der Gebläse 9 kann der Raum zwischen den Trumms 4, 6 als Unterdruckkammer 8 ausgebildet sein, wie dies die Figur 4 zeigt. Diese ist an die Saugseite eines Verdichters 18 angeschlossen.

Vor den Rollen 2, 3 sind jeweils zwei in horizontalem Abstand zueinander befindliche Transportwalzen 10, 11 vorgesehen, gegen die jeweils eine Gegenwalze 12 anliegt. Die Rollen 2, 3 und die Platten 5, 7 sind relativ zu den Transportwalzen 10, 11 und ihren Gegenwalzen 12 höhenverstellbar.

Die Rollen 2, 3 sind an ihrem Umfang mit Stiften 19 versehen, die in die Perforation 20 des Bands 1 eingreifen.

Soll die Oberseite eines Blattes gelesen werden, dann wird dieses über die rechten Transportwalzen 10, 11 dem oberen Einlauf 13 zugeführt. Die Gebläse 9 sind hierbei so geschaltet, daß oberhalb der Gebläse 9 ein Unterdruck herrscht. Über die Perforationen des Bandes 1 herrscht somit am oberen Trumm 4 ein Unterdruck, durch den das vom Band 1 zu transportierende Blatt gegen den oberen Trumm 4 gehalten wird. Beim Transport längs des Trumms 4 wird die Oberseite des Blatts durch eine Leseeinrichtung 15 abgetastet, die oberhalb der Platte 5 angeordnet ist.

Soll beim Lesen die Geschwindigkeit des Blatts verringert werden oder soll es beim Lesen stillstehen, dann kann ein Detektor vorgesehen sein, der oberhalb der Platte 5 angeordnet ist und die Blattvorderkante vor Erreichen des Auslaufs erfaßt. Durch das dabei erzeugte Signal kann die Transportgeschwindigkeit des Blatts verändert werden.

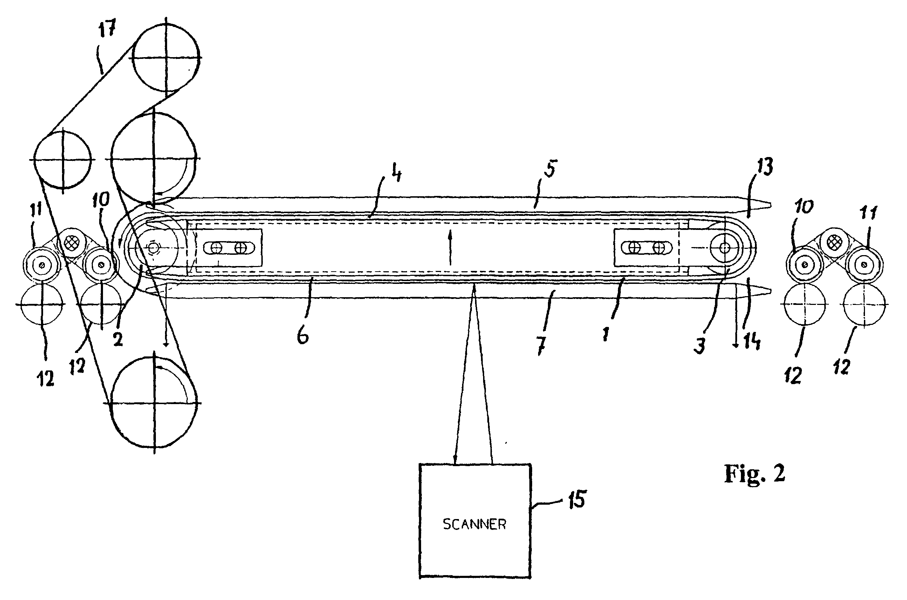

Soll die Unterseite eines Blatts gelesen werden, dann werden die Rollen 2, 3 mit dem Band 1 und den Platten 5, 7 nach oben in die in Figur 2 gezeigte Stellung gebracht, bei welcher sich die Transportwalzen 10, 11 mit ihren Gegenwalzen 12 in Höhe des unteren Einlasses 14 befinden. Die Leseeinrichtung 15 ist in diesem Fall unterhalb der Platte 7 angeordnet. Mit der Umstellung in die obere Stellung wird gleichzeitig die Drehrichtung der Rollen 2, 3 umgekehrt. Das gleiche gilt für die Gebläse 9, womit ein Unterdruck am unteren Trumm 6 erzeugt wird.

Das von den Transportwalzen 10, 11 dem unteren Einlaß 14 zugeführte Blatt wird infolge des Unterdrucks am unteren Trumm 6 haften und wird an der nunmehr unten befindlichen Lesevorrichtung 15 vorbeigeführt. In den Figuren 3 und 4 ist auch der Detektor 16 dargestellt, der dem Erfassen der Blattvorderkante dient.

Wie schon ausgeführt, kann auf die Gebläse 9 verzichtet werden, wenn der Raum zwischen dem oberen und dem unteren Trumm 4, 6 als Unterdruckkammer 8 ausgebildet ist.

Um die Umrüstung zu vereinfachen, können zwei Lesevorrichtungen 15 einmal oberhalb der Platte 5 und einmal unterhalb der Platte 7 vorgesehen sein.

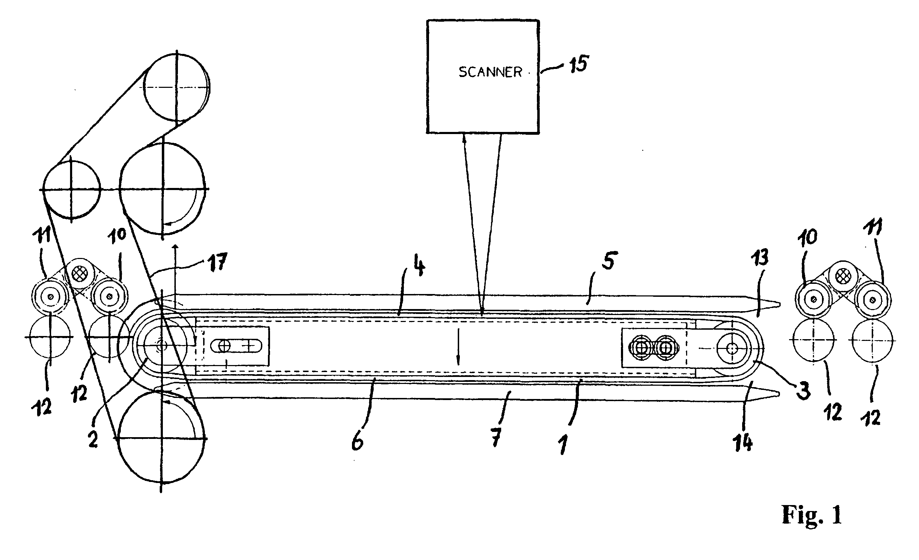

Die Platten 5, 7 können abnehmbar sein. Die Drehrichtungsumkehr der Rollen 2, 3 kann durch einen Elektromotor M3 bewirkt werden, der in seiner Drehrichtung umschaltbar ist. Im in den Figuren 1 und 2 gezeigten Ausführungsbeispiel wird die Rolle 2 über einen Zahnriemen 17 angetrieben, der je nach Höhenstellung und Drehrichtung der Rolle 2 links oder rechts mit einem Zahnrad dieser Rolle in Eingriff steht.

Die Transportwalzen 10, 11 mit ihren Gegenwalzen 12 an den Ein- und Ausläufen werden von einem gemeinsamen Elektromotor M1 mit gleicher Drehzahl synchron zur Bandgeschwindigkeit angetrieben.
¹Plural verb in the source.

## Patentansprüche

1. Vorrichtung zum Lesen von flächigem Material, bestehend aus einem endlosen perforierten Band (1), das über zwei Rollen (2, 3) geführt ist, von denen eine angetriebenist, bei der das Material von einer Zuführvorrichtung (10, 11, 12) einem Einlauf zugeführt wird und das Band (1) das Material zu einem Auslauf transportiert, wobei das Material durch einen an den Perforationen (20) des Bands (1) wirkenden Unterdruck gegen das Band (1) gehalten wird und mindestens eine Leseeinrichtung (15) vorgesehen ist, die Markierungen des vom Band (1) transportierten Materials erfaßt, **dadurch gekennzeichnet, daß** beidseits einer der Rollen (2 oder 3) je ein Einlauf (13 und 14) vorgesehen ist, die Vorrichtung relativ zur Zuführvorrichtung (10, 11, 12) verstellbar ist und in der einen Stellung der eine Einlauf (13 oder 14) sich in Höhe der Zuführvorrichtung (10, 11, 12) und in der anderen Stellung der andere Einlauf (14 oder 13) sich in Höhe der Zuführvorrichtung (10, 11, 12) befindet, bei einer Verstellung von der einen in die andere Stellung eine Drehrichtungsumkehr der angetriebenen Rolle (2 oder 3) stattfindet und die mindestens eine Leseeinrichtung (15) auf dasjenige Trumm (4 oder 6) des Bands (1) gerichtet ist, dessen Einlauf (13 oder 14) sich in Höhe der Zuführvorrichtung (10, 11, 12) befindet.

2. Vorrichtung nach Anspruch 1, **dadurch gekennzeichnet, daß** jedes Trumm (4, 6) des Bands (1) durch eine transparente Platte (5, 7) abgedeckt ist.

3. Vorrichtung nach Anspruch 2, **dadurch gekennzeichnet, daß** die Platten (5, 7) lösbar angeordnet sind

4. Vorrichtung nach einem der Ansprüche 1 bis 3, **dadurch gekennzeichnet, daß** zwischen dem einen und dem anderen Trumm (4, 6) eine Unterdruckkammer (8) angeordnet ist.

5. Vorrichtung nach einem der Ansprüche 1 bis 3, **dadurch gekennzeichnet, daß** zwischen dem einen und dem anderen Trumm (4, 6) mindestens ein Gebläse (9) angeordnet ist, dessen Drehrichtung reversibel ist und die Saugseite des Gebläses (9) auf dasjenige Trumm (4 oder 6) gerichtet ist, dessen Einlauf (13 oder 14) sich in Höhe der Zuführvorrichtung (10, 11, 12) befindet.

6. Vorrichtung nach einem der Ansprüche 2 bis 5, **dadurch gekennzeichnet, daß** die transparenten Platten (5, 7) an den Einläufen (13, 14) angeschrägt sind.

7. Vorrichtung nach einem der Ansprüche 1 bis 6, **dadurch gekennzeichnet, daß** die Zuführvorrichtung aus zwei im Abstand zueinander angeordneten Transportwalzen (10, 11) mit jeweils einer Gegenwalze (12) bestehen.

8. Vorrichtung nach einem der Ansprüche 1 bis 7, **dadurch gekennzeichnet, daß** die angetriebene Rolle (2 oder 3) durch einen in seiner Drehrichtung veränderbaren Elektromotor (M3) angetrieben wird.

9. Vorrichtung nach einem der Ansprüche 1 bis 7, **dadurch gekennzeichnet, daß** die angetriebene Rolle (2) durch einen Zahnriemen (17) angetrieben wird, der in der einen Stellung mit der einen Seite der Rolle (2) und in der anderen Stellung mit der anderen Seite der Rolle (2) in Eingriff steht.

10. Vorrichtung nach einem der Ansprüche 1 bis 9, **dadurch gekennzeichnet, daß** die Leseeinrichtung (15) in Richtung eines Trumms (4, 6) und rechtwinklig dazu verstellbar ist.

11. Vorrichtung nach einem der Ansprüche 1 bis 10, **dadurch gekennzeichnet, daß** im Bereich eines Auslaufes ein die Vorderkante des Materials erfassender Detektor (16) angeordnet ist, der beim Erfassen einer Vorderkante ein die Geschwindigkeit des Bands (1) verringerndes Signal erzeugt.

12. Vorrichtung nach einem der Ansprüche 1 bis 11, **dadurch gekennzeichnet, daß** die Rollen (2, 3) in ihrem Umfang mit Stiften (19) versehen sind, die in die Perforationen (20) des Bands (1) eingreifen.

## Claims

1. A device for reading flat material, consisting of an endless perforated belt (1), guided over two rollers (2, 3), of which one is driven, in which the material is fed to an inlet by a feed device (10, 11, 12) and the belt (1) transports the material to an outlet, the material being held against the belt (1) by means of a vacuum acting on the perforations (20) of the belt (1), and at least one reading device (15) being provided, which detects the markings of the material being transported by the belt (1), **characterised in that** respective inlets (13 and 14) are provided on both sides of one of the rollers (2 or 3), the device is adjustable relative to the feed device (10, 11, 12), and, in one position, one inlet (13 or 14) is at the level of the feed device (10, 11, 12) and, in the other position, the other inlet (14 or 13) is at the level of the feed device (10, 11, 12), upon adjustment from one position to the other there occurs a reversal in the direction of rotation of the driven roller (2 or 3), and the at least one reading device (15) is directed towards the side (4 or 6) of the belt (1) of which the inlet (13 or 14) is at the level of the feed device (10, 11, 12).

2. A device according to Claim 1, **characterised in that** each side (4, 6) of the belt (1) is covered by a transparent plate (5, 7).

3. A device according to Claim 2, **characterised in that** the plates (5, 7) are arranged so as to be detachable.

4. A device according to any one of Claims 1 to 3, **characterised in that** a vacuum chamber (8) is arranged between the one and the other belt side (4, 6).

5. A device according to any one of Claims 1 to 3, **characterised in that** at least one fan (9) is arranged between the one and the other belt side (4, 6), the direction of rotation of which is reversible, and the suction side of the fan (9) is directed towards the belt side (4 or 6) of which the inlet (13 or 14) is at the level of the feed device (10, 11, 12).

6. A device according to any one of Claims 2 to 5, **characterised in that** the transparent plates (5, 7) are chamfered at the inlets (13, 14).

7. A device'according to any one of Claims 1 to 6, **characterised in that** the feed device [consists]¹ of two transport rollers (10, 11), arranged so as to be mutually spaced and each comprising a mating roller (12).

8. A device according to any one of Claims 1 to 7, **characterised in that** the driven roller (2 or 3) is driven by means of an electric motor (M3) which is variable in its direction of rotation.

9. A device according to any one of Claims 1 to 7, **characterised in that** the driven roller (2) is driven by means of a toothed belt (17) which, in one position, is in meshing engagement with one side of the roller (2) and, in the other position, with the other side of the roller (2).

10. A device according to any one of Claims 1 to 9, **characterised in that** the reading device (15) is adjustable in the direction of one belt side (4, 6) and at right angles thereto.

11. A device according to any one of Claims 1 to 10, **characterised in that** a detector (16) detecting the leading edge of the material is arranged in the vicinity of an outlet, which detector, on detecting a leading edge, generates a signal reducing the speed of the belt (1).

12. A device according to one of Claims 1 to 11, **characterised in that** the rollers (2, 3) are provided with pins (19) in their periphery which engage into the perforations (20) of the belt (1).

## Revendications

1. Dispositif de lecture d'une matière à deux dimensions, constitué d'une bande (1) sans fin perforée qui passe sur deux rouleaux (2, 3) dont l'un est entraîné, dans lequel la matière est acheminée à une entrée par un dispositif d'acheminement (10,11, 12) et la bande (1) transporte la matière jusqu'à une sortie, la matière étant maintenue en appui sur la bande (1) au moyen d'une dépression s'exerçant à l'endroit des perforations (20) de la bande (1), tandis qu'il est prévu au moins un dispositif de lecture (15) qui détecte des marques de la matière transportée par la bande (1), **caractérisé en ce que**, sur chacun des deux côtés de l'un des rouleaux (2 ou 3), il est prévu une entrée respective (13 et 14), le dispositif peut être réglé en position vis-à-vis du dispositif d'acheminement (10, 11, 12) et, dans une première position, une première entrée (13 ou 14) se trouve à hauteur du dispositif d'acheminement (10, 11, 12) et, dans l'autre position, l'autre entrée (14 ou 13) se trouve à hauteur du dispositif d'acheminement (10, 11, 12), une inversion de sens de rotation du rouleau entraîné (2 ou 3) ayant lieu lors d'un réglage de position faisant passer d'une position à l'autre et le ou les dispositifs de lecture (15) sont dirigés sur le brin (4 ou 6) de la bande (1) dont l'entrée (13 ou 14) se trouve à hauteur du dispositif d'acheminement (10, 11, 12).

2. Dispositif suivant la revendication 1, **caractérisé en ce que** chaque brin (4, 6) de la bande (1) est recouvert par une plaque (5, 7) transparente.

3. Dispositif suivant la revendication 2, **caractérisé en ce que** les plaques (5, 7) sont disposées d'une manière amovible.

4. Dispositif suivant l'une des revendications 1 à 3, **caractérisé en ce qu'**une chambre à dépression (8) est disposée entre un premien brin et l'autre brin (4, 6).

5. Dispositif suivant l'une des revendications 1 à 3, **caractérisé en ce qu'**entre un premier brin et l'autre brin (4, 6), il est disposé au moins un ventilateur (9) dont le sens de rotation est réversible et le côté d'aspiration du ventilateur (9) est dirigé sur le brin (4 ou 6) dont l'entrée (13 ou 14) se trouve à hauteur du dispositif d'acheminement (10, 11, 12).

6. Dispositif suivant l'une des revendications 2 à 5, **caractérisé en ce que** les plaques (5, 7) transparentes sont biseautées à l'endroit des entrées (13, 14).

7. Dispositif suivant l'une des revendications 1 à 6, **caractérisé en ce que** le dispositif d'acheminement est constitué de deux cylindres de transport (10, 11) disposés à distance l'un de l'autre et comportant chacun un contre-cylindre (12) respectif.

8. Dispositif suivant l'une des revendications 1 à 7, **caractérisé en ce que** le rouleau entraîné (2 ou 3) est entraîné par un moteur électrique (M3) dont il est possible de modifier le sens de rotation.

9. Dispositif suivant l'une des revendications 1 à 7, **caractérisé en ce que** le rouleau entrsîné (2) est entraîné au moyen d'une courroie crantée (17) qui, dans une première position, engrène avec un premier côté du rouleau (2) et, dans l'autre position, engrène avec l'autre côté du rouleau (2).

10. Dispositif suivant l'une des revendications 1 à 9, **caractérisé en ce que** le dispositif de lecture (15) est réglable en position en direction d'un brin (4, 6) et perpendiculairement.

11. Dispositif suivant l'une des revendications 1 à 10; **caractérisé en ce que**, dans la zone d'une sortie, il est disposé un détecteur (16) qui détecte le bord avant de la matière et qui, lors de la détection d'un bord avant, produit un signal réduisant la vitesse de la bande (1).

12. Dispositif suivant l'une des revendications 1 à 11, **caractérisé en ce que** les rouleaux (2, 3) sont pourvus, sur leur périphérie, d'ergots (19) qui s'engagent dans les perforations (20) de la bande (1).
